# EUROPEAN PATENT SPECIFICATION

(11) **EP 1 675 330 B1**
(45) Date of publication and mention of the grant of the patent: **02.05.2007**
(21) Application number: 05257705.3
(22) Date of filing: 15.12.2005
(51) Int. Cl.: H04L 12/58

(54) **Unwanted message (SPAM) detection based on message content**
Erkennung von unerwünschten Nachrichten (SPAM) auf Basis des Nachrichteninhalts
Détection de courrier électronique non sollicité (SPAM) basée sur le contenu du message

(30) Priority: 21.12.2004 US 18270
(43) Date of publication of application: 28.06.2006
(73) Proprietor: LUCENT TECHNOLOGIES INC., Murray Hill, New Jersey 07974-0636 (US)
(72) Inventor: Cai, Yigang, Naperville, Illinois 60565 (US); Qutub, Shehryar S., Hoffman Estates, Illinois 60194 (US); Sharma, Alok, Lisle, Illinois 60532 (US)
(74) Representative: Sarup, David Alexander

(56) References cited:
- WO-A-00/26795
- WO-A-20/04061698
- US-B1- 6 654 787
- SEGAL R B ET AL: "MAILCAT: AN INTELLIGENT ASSISTANT FOR ORGANIZING E-MAIL" PROCEEDINGS OF THE 3RD ANNUAL CONFERENCE ON AUTONOMOUS AGENTS. SEATTLE, WA, MAY 1 - 5, 1999, PROCEEDINGS OF THE ANNUAL CONFERENCE ON AUTONOMOUS AGENTS, NEW YORK, NY : ACM, US, 1 May 1999 (1999-05-01), pages 276-282, XP002301012 ISBN: 1-58113-066-X

## Description

### Technical Field

This invention relates to methods for detecting spam messages based on the content of the message.

### Background of the Invention

With the advent of the Internet, it has become easy to send messages to a large number of destinations at little or no cost to the sender. The messages include the short messages of short message service. These messages include unsolicited and unwanted messages (spam) which are a nuisance to the receiver of the message who has to clear the message and determine whether it is of any importance. Further, they are a nuisance to the carrier of the telecommunications network used for transmitting the message, not only because they present a customer relations problem with respect to irate customers who are flooded with spam, but also because these messages, for which there is usually little or no revenue, use network resources. An illustration of the seriousness of this problem is given by the following two statistics. In China in 2003, two trillion short message service (SMS) messages were sent over the Chinese telecommunications network; of these messages, an estimated three quarters were spam messages. The second statistics is that in the United States an estimated 85-90% of e-mail messages are spam.

A number of arrangements have been proposed and many implemented for cutting down on the number of delivered spam messages. Various arrangements have been proposed for analyzing messages prior to delivering them. According to one arrangement, if the calling party is not one of a pre-selected group specified by the called party, the message is blocked. Spam messages can also be intercepted by permitting a called party to specify that no messages destined for more than N destinations are to be delivered.

A called party can refuse to publicize his/her telephone number or e-mail address. In addition to the obvious disadvantages of not allowing callers to look up the telephone number or e-mail address of the called party, such arrangements are likely to be ineffective. An unlisted e-mail address can be detected by a sophisticated hacker from the IP network, for example, by monitoring message headers at a router. An unlisted called number simply invites the caller to send messages to all 10,000 telephone numbers of an office code; as mentioned above, this is very easy with present arrangements for sending messages to a plurality of destinations.

Among the more elusive spam messages are obnoxious messages for pornographic purposes or to carry unwanted advertisements to the receivers. Frequently, such messages can only be intercepted through an examination of the content of the message since the senders may be sending many innocuous messages from the same source. A major problem of spam detection is that of detecting spam based on the content of the message.

Patent Document WO 00/26795 (JUSTSYSTEM Pittsburgh Research Center, M. Kantrowitz et al.; 11 May 2000) discloses arrangements for assigning, from a term lexicon, a weight for each term of a document, multiplying the weight by the number of occurrences, and dividing by the total number of words or the number of unique words in order to derive a score representing the possibility that a document may represent a junk message.

Patent Document WO 2004/061698 (Activestate Corporation, I. Dougherty et al.; 22 July 2004) discloses arrangements for detecting spam messages on the basis of spam features. The features are used to derive classification information for analyzing messages to determine whether a message is a spam message.

### Summary of the Invention

The above problem is alleviated and an advance is made over the prior art in accordance with Applicants' invention wherein suspect messages are analyzed for the presence of certain properties such as key words and for the frequency of such properties; each property is given an appropriate spam index, a quantity that is almost static and is predefined and provisioned, and, advantageously, a weighting factor which changes dynamically, depends on traffic volume and message/content types. Messages are examined for any property whose frequency of use exceeds a threshold; predetermined combinations of properties whose combined use exceeds a threshold; and all properties whose combined use exceeds a threshold. In accordance with one feature of Applicants' invention, the weighting factor of each property can be dynamically adjusted to match the results of an examination of suspected messages by a human analyst. Advantageously, through the use of a human analyst the detection process can learn.

### Brief Description of the Drawing(s)

FIG. 1 illustrates the operation of Applicants' invention; and
FIG. 2 is a flow diagram illustrating Applicants' invention.

### Detailed Description

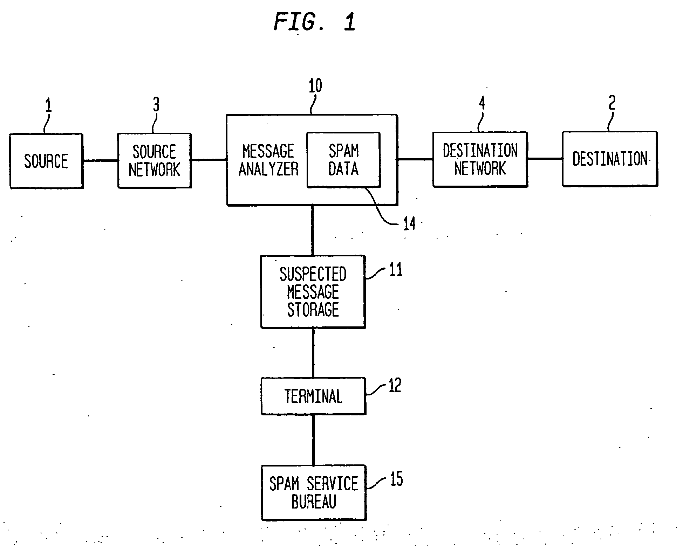

FIG. 1 illustrates the operation of Applicants' invention. A source 1 wishes to send a message to a destination 2. The message is sent to a network 3 which recognizes that this may be a spam message but one which requires message content analysis to make a determination. The network 3 passes the message to a message analyzer 10. If the message analyzer concludes that this is not a spam message, the message is sent via network 4 to destination 2.

The message analyzer 10 contains tabular data 14 of properties, severity index for each property, weighting factor for each severity index and severity level threshold for the property.

A spam property is a word, phrase, sentence, image or video segment that is a possible indicator of a spam message. The word "madam" is an example. For each property occurring in the message, a product of the number of occurrences of the property, the severity index and the weighting factor is calculated to derive a severity level. The severity levels are used to determine whether the message is to be treated as a spam message.

The severity index and severity threshold are kept relatively constant, but the weighting factor can be changed in response to messages from a spam service bureau 15, in response to detection at the bureau of special problem areas (to increase the weighting factor) or areas in which there has been little spam activity (to reduce the weighting factor).

The message analyzer takes the content of a message and looks for pre-stored properties such as, for example, the words "madam" and "lovers". For each pre-stored property there is a weighting factor to indicate how heavily this property is to be weighted in arriving at a severity level. Messages whose severity level exceeds a predefined threshold are blocked and may be stored for further human analysis.

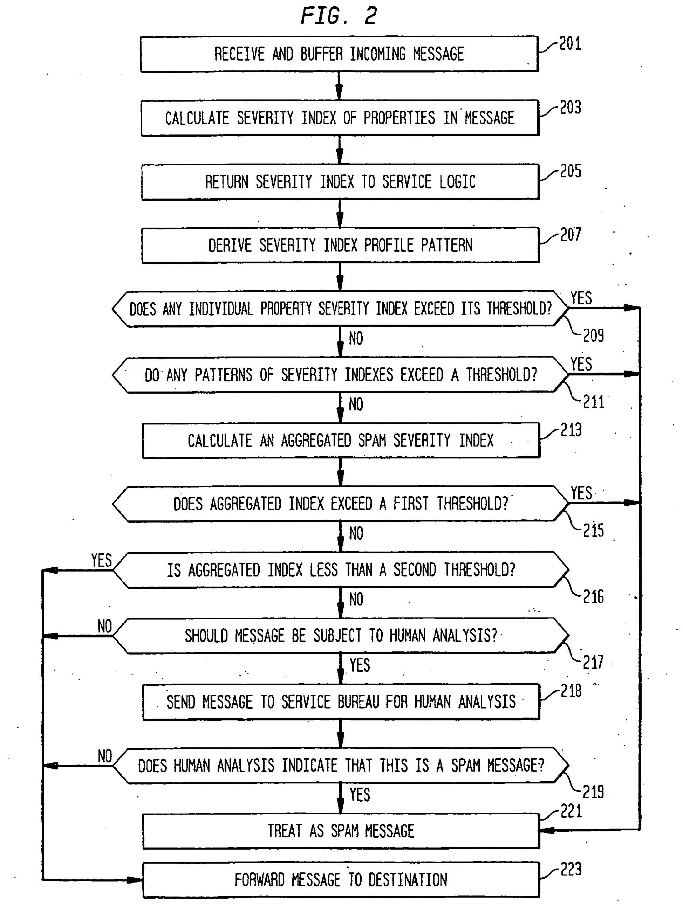

FIG. 2 is a flow diagram illustrating the operation of Applicants' spam check. An incoming message is received and buffered for spam analysis (action block 201). The spam tabular data is obtained in order to calculate spam severity index for properties of the message (action block 203). The spam analysis returns the spam severity index for message properties of the message (action block 205). Service logic fills in an analysis spreadsheet with severity index for each property and obtains the distributed spam severity index profile pattern (action block 207). Test 209 checks if any individual property severity index exceeds the threshold for that property. If any exceeds the limit (action block 221, to be described below) is entered. Otherwise, test 211 is entered to check whether any patterns of severity index exceed a threshold. If any exceed the threshold for the pattern, action block 221 is entered. Otherwise, an aggregated spam severity index is calculated using all the properties or all properties whose severity index exceeds a threshold (action block 213). If this aggregated index exceeds an upper threshold (test 215) the message is black. If it is less than a lower threshold (test 216) the message is white. For other messages, test 217 is used to determine whether the message should be subject to human analysis. If not, the message is relayed (action block 223) to its destination. If it has been selected for human analysis the message is sent to a service bureau (action block 218). The human examination result (test 219) will determine either a satisfactory result, and the message will be forwarded (action block 223), or an unsatisfactory result and the message will be treated as being spam and will be subject to the functions of action block 221.

Action block 221 stores the spam message, if necessary, stores an updated spam filter and rule service database that was derived by the human examination, and updates the spam severity weight factor and index upper limit and, if necessary, adds new distributed spam patterns.

The above description is of one preferred embodiment of Applicants' invention. Other embodiments will be apparent to those of ordinary skill in the art without departing from the scope of the invention. The invention is limited only by the attached claims.

## Claims

1. A method for detecting unwanted, spam, messages in a telecommunications network, comprising the steps of:
storing (14) an index that is predefined for each property of a potential message; detecting and storing (10, 11, 201) a suspected spam message;
deriving properties of the stored spam message (10, 203);
calculating the product of the number of occurrences of each property and its index (203);
forming a distributed spam profile from the products (207); and
determining (213, 215) whether said distributed spam profile meets the criteria for classifying a message as a spam message;
**Characterized in that**:
the step of storing (10, 11, 201), further comprises the step of storing a dynamically adjustable weighting factor and a limit for each property of a potential message; and
the step of calculating (203) comprises the step of calculating the product of the number of occurrences of each property, said dynamically adjustable weighting factor and said predefined index.

2. The method of claim 1 wherein if any product exceeds its upper limit for the property of that product (209), declaring the associated message a spam message (221).

3. The method of claim 1 further comprising the steps of:
storing for a plurality of patterns of properties an upper limit for each pattern (211); and
if the upper limit for any pattern is exceeded, declaring a message a spam message (221).

4. The method of claim 1 wherein if the sum of all products for said message exceeds a predetermined upper threshold (213), treating said message as a spam message (221).

5. The method of claim 1 wherein the weighting factor or upper limit of a property can be changed in response to a message from a service bureau.

6. Apparatus for detecting unwanted, spam, messages in a telecommunications network, comprising:
means for storing (14) a predefined index for each property of a potential message;
means for storing (10, 11, 201) a suspected spam message;
means (10, 203) for deriving properties of the stored spam message;
means (10, 203) for calculating the product of the number of occurrences of each property and its predefined index;
means (10, 207) for forming a distributed spam profile from the products; and
means (10, 213, 215) for determining whether said distributed spam profile meets the criteria for classifying a message as a spam message
**Characterized in that**:
said means for storing (14) further comprises means for storing a dynamically adjustable weighting factor and a limit for each property of a potential message; and
said means for calculating (10, 201) comprises means for calculating the product of the number of occurrences for each property and said dynamically adjustable weighting factor and said predefined index.

7. The apparatus of claim 6 further comprising means for treating the associated message as a spam message (10, 211) if any product exceeds its upper limit for the property of that product (10, 209).

8. The apparatus of claim 6 further comprising:
means for storing for a plurality of patterns of properties an upper limit for each pattern (10, 211); and
if the upper limit for any pattern is exceeded, means for treating a message as a spam message (10, 221).

9. The apparatus of claim 6 further comprising means for treating the associated message as a spam message (10, 211) if the sum of all products for said message exceeds a predetermined upper threshold (10, 213).

10. The apparatus of claim 6 further comprising means (10) for changing the weighting factor or upper limit of a property in response to a message from a service bureau (15).

## Patentansprüche

1. Verfahren zum Erkennen von unerwünschten Spam-Nachrichten in einem Telekommunikationsnetz, mit den folgenden Schritten:
Speichern (14) eines Index, der für jede Eigenschaft einer potentiellen Nachricht vordefiniert ist;
Erkennen und Speichern (10, 11, 201) einer Nachricht, von der verdächtigt wird, daß sie Spam ist;
Ableiten von Eigenschaften der gespeicherten Spam-Nachricht (10, 203);
Berechnen des Produkts der Anzahl, wie oft jede Eigenschaft auftritt, und ihres Index (203);
Bilden eines verteilten Spam-Profils aus den Produkten (207); und
Bestimmen (213, 215), ob das verteilte Spam-Profil den Kriterien für die Klassifizierung einer Nachricht als eine Spam-Nachricht genügt;
**dadurch gekennzeichnet, daß**
der Schritt des Speicherns (10, 11, 201) ferner den Schritt des Speicherns eines dynamisch einstellbaren Gewichtungsfaktors und einer Grenze für jede Eigenschaft einer potentiellen Nachricht umfaßt; und
der Schritt des Berechnens (203) den Schritt des Berechnens des Produkts der Anzahl, wie oft jede Eigenschaft auftritt, des dynamisch einstellbaren Gewichtungsfaktors und des vordefinierten Index umfaßt.

2. Verfahren nach Anspruch 1, wobei, wenn irgendein Produkt seine Obergrenze für die Eigenschaft dieses Produkts (209) überschreitet, die assoziierte Nachricht als eine Spam-Nachricht deklariert wird (221).

3. Verfahren nach Anspruch 1, ferner mit den folgenden Schritten:
für mehrere Muster von Eigenschaften wird eine Obergrenze für jedes Muster gespeichert (211); und
wenn die Obergrenze für irgendein Muster überschritten wird, Deklarieren einer Nachricht als Spam-Nachricht (221).

4. Verfahren nach Anspruch 1, wobei, wenn die Summe aller Produkte für die Nachricht eine vorbestimmte obere Schwelle (213) überschreitet, die Nachricht als eine Spam-Nachricht behandelt wird (221).

5. Verfahren nach Anspruch 1, wobei der Gewichtungsfaktor oder die Obergrenze einer Eigenschaft als Reaktion auf eine Nachricht von einem Servicebüro geändert werden können.

6. Vorrichtung zum Erkennen von unerwünschten Spam-Nachrichten in einem Telekommunikationsnetz, umfassend:
ein Mittel zum Speichern (14) eines Index, der für jede Eigenschaft einer potentiellen Nachricht vordefiniert ist;
ein Mittel zum Speichern (10, 11, 201) einer Nachricht, von der verdächtigt wird, daß sie Spam ist;
ein Mittel zum Ableiten (10, 203) von Eigenschaften der gespeicherten Spam-Nachricht;
ein Mittel zum Berechnen (10, 203) des Produkts der Anzahl, wie oft jede Eigenschaft auftritt, und ihres vordefinierten Index;
ein Mittel (10, 207) zum Bilden eines verteilten Spam-Profils aus den Produkten; und
ein Mittel (10, 213, 215) zum Bestimmen, ob das verteilte Spam-Profil den Kriterien für die Klassifizierung einer Nachricht als eine Spam-Nachricht genügt;
**dadurch gekennzeichnet, daß**
das Mittel zum Speichern (14) ferner ein Mittel zum Speichern eines dynamisch einstellbaren Gewichtungsfaktors und einer Grenze für jede Eigenschaft einer potentiellen Nachricht umfaßt; und
das Mittel zum Berechnen (10, 201) ein Mittel zum Berechnen des Produkts der Anzahl, wie oft jede Eigenschaft auftritt, des dynamisch einstellbaren Gewichtungsfaktors und des vordefinierten Index umfaßt.

7. Vorrichtung nach Anspruch 6, ferner mit einem Mittel zum Behandeln der assoziierten Nachricht als eine Spam-Nachricht (10, 211), wenn irgendein Produkt seine Obergrenze für die Eigenschaft dieses Produkts (10, 209) überschreitet.

8. Vorrichtung nach Anspruch 6, ferner umfassend:
ein Mittel, das für mehrere Muster von Eigenschaften eine Obergrenze für jedes Muster speichert (10, 211); und
ein Mittel zum Behandeln einer Nachricht als eine Spam-Nachricht (10, 221), wenn die Obergrenze für irgendein Muster überschritten wird.

9. Vorrichtung nach Anspruch 6, ferner mit einem Mittel zum Behandeln der assoziierten Nachricht als eine Spam-Nachricht (10, 211), wenn die Summe aller Produkte für die Nachricht eine vorbestimmte obere Schwelle (10, 213) überschreitet.

10. Vorrichtung nach Anspruch 6, ferner mit einem Mittel (10) zum Ändern des Gewichtungsfaktors oder der Obergrenze einer Eigenschaft als Reaktion auf eine Nachricht von einem Servicebüro (15).

## Revendications

1. Procédé de détection de messages non sollicités, polluriels, dans un réseau de télécommunication, comprenant les étapes de :
stockage (14) d'un indice qui est prédéfini pour chaque propriété d'un message potentiel ;
détection et stockage (10, 11, 201) d'un polluriel suspecté ;
déduction des propriétés du polluriel stocké (10, 203) ;
calcul du produit du nombre d'occurrences de chaque propriété et de son indice (203) ;
formation d'un profil de polluriel distribué à partir des produits (207) ; et
détermination (213, 215) si ledit profil de polluriel distribué satisfait aux critères de classification d'un message en tant que polluriel :
**caractérisé en ce que** :
l'étape de stockage (10, 11, 201), comprenant en outre l'étape de stockage d'un facteur de pondération réglable dynamiquement et d'une limite pour chaque propriété d'un message potentiel ; et
l'étape de calcul (203) comprend l'étape de calcul du produit du nombre d'occurrences de chaque propriété, dudit facteur de pondération réglable dynamiquement et dudit indice prédéfini.

2. Procédé selon la revendication 1 dans lequel si un produit quelconque dépasse sa limite supérieure pour la propriété de ce produit (209), déclaration que le message associé est un polluriel (221).

3. Procédé selon la revendication 1 comprenant en outre les étapes de :
stockage pour une pluralité de modèles de propriétés d'une limite supérieure pour chaque modèle (211) ; et
si la limite supérieure pour un modèle quelconque est dépassée, déclaration qu'un message est un polluriel (221).

4. Procédé selon la revendication 1 dans lequel si la somme de tous les produits pour ledit message dépasse un seuil supérieur prédéterminé (213), traitement dudit message comme un polluriel (221).

5. Procédé selon la revendication 1 dans lequel le facteur de pondération ou la limite supérieure d'une propriété peut être changé(e)en réponse à un message provenant d'un service bureau.

6. Appareil de détection de messages non sollicités, polluriels, dans un réseau de télécommunication, comprenant :
des moyens de stockage (14) d'un indice prédéfini pour chaque propriété d'un message potentiel ;
des moyens de stockage (10, 11, 201) d'un polluriel suspecté ;
des moyens (10, 203) de déduction des propriétés du polluriel stocké ;
des moyens (10, 203) de calcul du produit du nombre d'occurrences de chaque propriété et de son indice prédéfini ;
des moyens (10, 207) de formation d'un profil de polluriel distribué à partir des produits ; et
des moyens (10, 213, 215) de détermination si ledit profil de polluriel distribué satisfait aux critères de classification d'un message en tant que polluriel :
**Caractérisé en ce que** :
lesdits moyens de stockage (14) comprennent en outre des moyens de stockage d'un facteur de pondération réglable dynamiquement et d'une limite pour chaque propriété d'un message potentiel ; et
lesdits moyens de calcul (10, 201) comprennent des moyens de calcul du produit du nombre d'occurrences de chaque propriété et dudit facteur de pondération réglable dynamiquement et dudit indice prédéfini.

7. Appareil selon la revendication 6 comprenant en outre des moyens de traitement du message associé comme un polluriel (10, 211) si un produit quelconque dépasse sa limite supérieure pour la propriété de ce produit (10, 209).

8. Appareil selon la revendication 6 comprenant en outre :
des moyens de stockage pour une pluralité de modèles de propriétés d'une limite supérieure pour chaque modèle (10, 211) ; et
si la limite supérieure pour un modèle quelconque est dépassée, des moyens de traitement d'un message comme un polluriel (10, 221).

9. Appareil selon la revendication 6 comprenant en outre des moyens de traitement du message associé comme un polluriel (10, 211) si la somme de tous les produits pour ledit message dépasse un seuil supérieur prédéterminé (10, 213).

10. Appareil selon la revendication 6 comprenant en outre des moyens (10) de changement du facteur de pondération ou de la limite supérieure d'une propriété en réponse à un message provenant d'un service bureau (15).
